# EUROPEAN PATENT SPECIFICATION

(11) **EP 1 294 517 B1**
(45) Date of publication and mention of the grant of the patent: **26.01.2005**
(21) Application number: 00940746.1
(22) Date of filing: 09.06.2000
(51) Int. Cl.: B23D 63/18

(54) **MACHINE FOR CORRECTING PLANARITY ERRORS OF DISCOIDALLY SHAPED TOOLS**
MASCHINE ZUR KORREKTUR VON UNEBENHEITEN IN SCHEIBENFÖRMIGEN WERKZEUGEN
MACHINE A RECTIFIER LES ERREURS DE PLANARITE D'OUTILS DISCOIDES

(43) Date of publication of application: 26.03.2003
(73) Proprietor: Automatismi Brazzale S.R.L, 36051 Creazzo (IT)
(72) Inventor: BRAZZALE, Giorgio, I-36051 Creazzo (IT)
(74) Representative: Vannini, Mario
(86) International application number: PCT/IT2000/000235
(87) International publication number: WO 2001/094066

(56) References cited:
- EP-A- 0 521 824
- DE-A- 1 552 716
- GB-A- 2 154 731
- US-A- 510 210
- US-A- 3 332 266
- US-A- 3 964 348
- US-A- 4 138 908
- US-A- 5 522 283
- US-A- 6 067 879

## Description

### Field of the invention

The present invention relates to a machine for the correction of planarity errors of discoidally shaped tools, as for example known from US 6 067 879.

The machine according to the present invention may be advantageously employed in industrial processes involved in the production of discoidally shaped tools, the type that can be mounted on fixed or portable motorised equipment (electrotools) for cutting of materials such as glass, wood, bricks in general, ceramics, granite and reinforced concrete.

### Background of the invention

As known, the above mentioned tools are generally constituted by a core of metal plate having a substantially discoidal and flat configuration, peripherally provided with a cutting edge which can be obtained by mechanical workings or depositing abrasive materials that are welded or joined by means, for example, of sinterisation or electroplating processes.

In order to achieve a sufficient working precision, these tools must exhibit such planarity deviation errors that they fall within the allowed tolerance limits. It often occurs though that the different manufacturing phases of these tools entail the occurrence of stresses and strains within the discoidally shaped structure that lead to deviations from planarity that go beyond such tolerance limits.

These deviations are mostly present in correspondence with the outer peripheral edge of the disks where the deviations attain the maximum value.

Currently, in accordance with the prior art, planarity errors, which effect these tools, are corrected by means of a simple manual hammering of the discoidally shaped surface.

Such an operation is difficult to carry out and it requires an operator with great skills as the surface of the tools must be hammered with the greatest care in order to attain extremely precise results.

The above operation is furthermore rather expensive, cumbersome and not always capable of achieving a satisfactory qualitative standard, as it cannot be repeated and as already mentioned, its outcomes exclusively depend on the skills of the operator.

These manual operations carried out to flatten the tools surfaces obviously require rather long labour times, and these negatively affect the yield and efficiency of the whole production process.

US-A-6 067 879 discloses a machine for correcting planarity errors comprising all the features mentioned in the preamble of claim 1. However, in this prior art the detection means or sensor is movable in at least a radial direction to measure or detect substantially the whole surface of the circular blade tool under correction on both sides thereof. Thus, the detection time of the whole surface is relatively long lasting and increase the processing time as a whole and involves higher production costs.

US-A-3 964 348 teaches a method and machine for straightening and tensioning saw blades, also comprising all the features mentioned in the preamble of the new claim 1 and specifically a sensor for detecting the surface deviation from planarity and tensioning defects of a blade. However, the sensor of this prior machine is moved relative to the blade sweeping the entire surface of the saw blade, thus increasing the detection time negatively affecting the mode of operation of the machine as a whole.

US-A-5 522 283 relates to a circular saw levelling and tensioning machine using straightening and tensioning rotating rollers mounted on parallel shafts and acting on the opposite side surfaces of the blade to be treated. The machine further comprises a detector or sensor mounted on a movable foot adapted to move along a radius of the circular blade to scan the whole surface thereof. Thus, the detection of a particular area of the blade is considered insufficient to carry out the correction of the tool as a whole and therefore the detection is extended to the whole the side surfaces of the blade rendering the correction process relatively time consuming and expensive.

### Summary of the invention

A primary object of the present invention is therefore to overcome all inconveniences and drawbacks of the above mentioned manual technique by proposing a machine that makes it possible to carry out the correction the planarity errors discoidally shaped tools are affected by in an automatic fashion, in a short time and ensuring a high and constant qualitative standard.

A further aim of the present invention is to provide a machine that is simple from the structural point of view, and totally reliable in operation.

The above and other objects are achieved by the machine for correcting planarity errors of discoidally shaped tools which, in accordance with claim 1, comprises a supporting structure lying on the ground, holding means mounted on said supporting structure for removably engaging at least one discoidally shaped tool in proximity off the central portion thereof, pressing means mounted on said supporting structure and operatively actuated to pressure engage at least one of the upper and/or lower surfaces of the discoidally shaped tool, first movement means for providing a relative movement of said discoidally shaped tool with respect to said pressing means along at least one direction that is substantially parallel to the main tool extension plane, second movement means for rotating said discoidally shaped tool about its central axis, detection means adapted to be operatively actuated onto at least one of the upper and/or lower surfaces of said discoidally shaped tool for detecting the deviations from planarity of said at least one surface thereof, a logic control unit operatively connected with said detection means for controlling said first and second movement means and for actuating said pressing means to selectively engage at least one surface of the discoidally shaped tool for correcting the planarity errors thereof, characterised in that said pressing means are rigidly fixed onto said supporting structure, said holding means being supported by a movable carriage which is slidingly mounted on guide means secured to said supporting structure, said first movement means being operatively associated with said carriage for translating it between a first operative position wherein said discoidally shaped tool is maintained by said holding means in a substantially horizontally position and a second operative position wherein said discoidally shaped tool is pressure engaged by said pressing means, said detection means being integrally fitted onto said carriage to be actuated with said carriage in its first operative position, said logic control unit comprising elaboration means for processing deviations from planarity detected by said detection means and for controlling operation of said pressing means exclusively in correspondence of the outermost peripheral edge of the discoidally shaped tool where the planarity error is maximum, in such a manner to avoid detection and correction of other portions of the tool where the planarity errors are smaller.

By means of the machine according to the present invention, the times and costs involved in the correction of planarity errors affecting discoidally shaped tools are remarkably reduced.

Moreover such a machine is constructively simple while fully reliable from the operational point of view.

### Brief Description of the drawings

The technical features of the present invention according to its specific objects and aims are clearly falling within the scope of the annexed claims and will become more apparent from the detailed description that follows, with reference to the attached tables of drawings, that show an exemplary but not limiting embodiment thereof, where:
Fig. 1 illustrates a first schematic side view of the machine according to the present invention, showing the cross section of some of its parts and with some of its parts removed in order to better highlight its structure;
Fig. 2 illustrates a second schematic side view of the machine shown in Fig. 1;
Fig. 3 illustrates a schematic front view of the machine shown in Fig. 1;

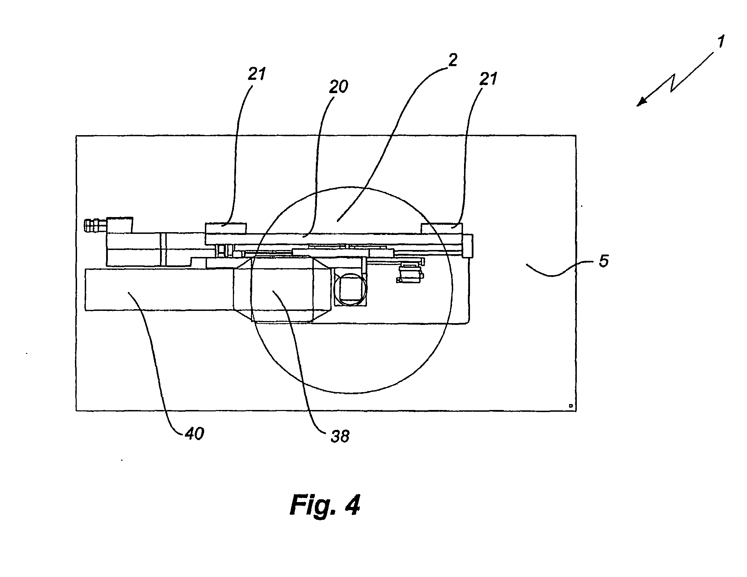

Fig. 4 illustrates a schematic plan view of the machine shown in Fig. 1.

### Detailed Description of a preferred form of Embodiment

With reference to the attached drawings, the machine for the correction of planarity errors according to the present invention is generally indicated with the reference numeral 1 and the discoid ally shaped tool subjected to correction of planarity errors affecting ir is generally indicated with the reference numeral 2.

Tool 2 that may be for example employed in cutting machines, traditionally comprises a metal plate core having a discoidally shaped configuration with a peripheral cutting edge and a central hub provided with an axial hole suitable for fixing the tool to the mandrel of a cutting machine.

The above cutting edge can be either obtained by sharpening a peripheral crown of the disk core or by applying abrasive means that are peripherally welded onto the core or joined to it by sintering or electroplating processes.

As it is known, at the end of the production process, such discoidally shaped tools 2 often exhibit deviations from planarity that result to be more enhanced in correspondence of their outermost peripheral edge.

In this regard, it is observed that planarity error can frequently assume different values in correspondence of such outermost periphery whereas it generally decreases along a radial direction towards the hub.

Therefore, in order to meet the allowed planarity tolerance, it will be sufficient to carry out corrections that bring the deviations detected along the outer peripheral edge within allowed values, because all other portions of the tool core may be affected by even smaller deviations.

Machine 1 is provided with a supporting structure 3 lying on the ground, comprising a plurality of legs 4 that extend from an upper supporting plate 5.

Above the supporting plate 5 holding means 6 are mounted which engage onto the hub of the discoidally shaped tool, to secure it in a substantially horizontal position. Advantageously, holding means 6, which will be better described hereinafter, ensure that the discoidally shaped tool is affected by deviations from the horizontal position that fall within very narrow tolerance limits, for example comprised in the 2 hundredths of a millimetre.

As shown in the attached drawings, holding means 6 are supported by a carriage 7, which is in turn slidingly mounted onto support structure 3.

More particularly, discoidally shaped tool 2 is capable of being moved over the whole plane on which it lies by actuation of first movement means 8 which are operatively associated with carriage 7 in order to move it, together with the discoidally shaped tool 2, along a translation direction X that is substantially parallel to the plate of the tool, and by actuation of second movement means 9 which provide rotation of the discoidally shaped tool 2 about its central axis Z.

Detection means 10 are further provided on the above carriage 7, which detection means being operatively actuated over the lower surface of the discoidally shaped tool 2, so as to detect any deviations from planarity.

Pressing means 11 are fixed above supporting plate 5, which pressing means are in turn functionally actuatable over the upper surface of the discoidally shaped tool 2 in order to correct the planarity errors.

According to the invention, a logic control unit 12 is further provided which preferably comprises a PLC or of an industrial computer that is suitable for controlling the manufacturing process of the discoidally shaped tool.

This basic unit is thus capable of controlling the detection means 10, the actuation of the discoidally shaped tool 2 by means of first and second movement means 8, 9 and consequently the actuation of pressing means 11 over different portions of the discoidally shaped tool according to predetermined operative sequences, in such a manner to render it planar.

A suitable operative program can be installed onto the logic control unit 12. Said operative program is suitable to process deviations from planarity detected by detection means 10, and to consequently define a sequence of compression steps to be carried out over the surface of tool 2, which sequence being carried out by the pressing means 11. In order to allow pressing means 11 to operate over a sequence of portions of the surface of tool 2, that obviously correspond with a sequence of positions held by the tool itself 2 with respect to pressing means 11, the operative program installed into the logic control unit 12 controls the movements of tool 2 itself by means of the controlled operation of respectively first 8 and second 9 movement means.

More in detail, carriage 7 can be moved between a first operative position, drawn in dotted line and indicated with the reference numeral 13, where the discoidally shaped tool 2 is rigidly secured by holding means 6, and a second operative position 14, where the discoidally shaped tool 2 is subjected to the tension exerted by pressing means 11.

Advantageously, detection means 10 are integrally fitted onto carriage 7 and are actuated by logic control unit 12 when the carriage itself is located in said first operative position 13.

First movement means 8 for the motion of carriage 7 along translation direction X may be provided by a first motor 15 whose rotating shaft is connected to an advancement screw 16 by means of a first self-centering joint 17. A support joint 18 is mounted coaxially with respect to screw 16 and is rigidly connected to carriage 7 by means of a stirrup 19 in such a way that carriage 7 is caused to advance along translation direction X together with tool 2 following the actuation of the first motor 15 and the subsequent rotation of screw 16.

Upon translation motion on supporting plate 5 of the supporting structure 3 of machine 1 along X direction, carriage 7 is guided by at least one guide 20 supported at its ends by two columns 21.

According to a preferred embodiment of the present invention, the above mentioned holding means 6 comprise at least one mandrel 22 provided with an idle flange 23 that is mechanically connected to a first actuator 24 and with a driving flange 25 that is mechanically connected to the second movement means 9.

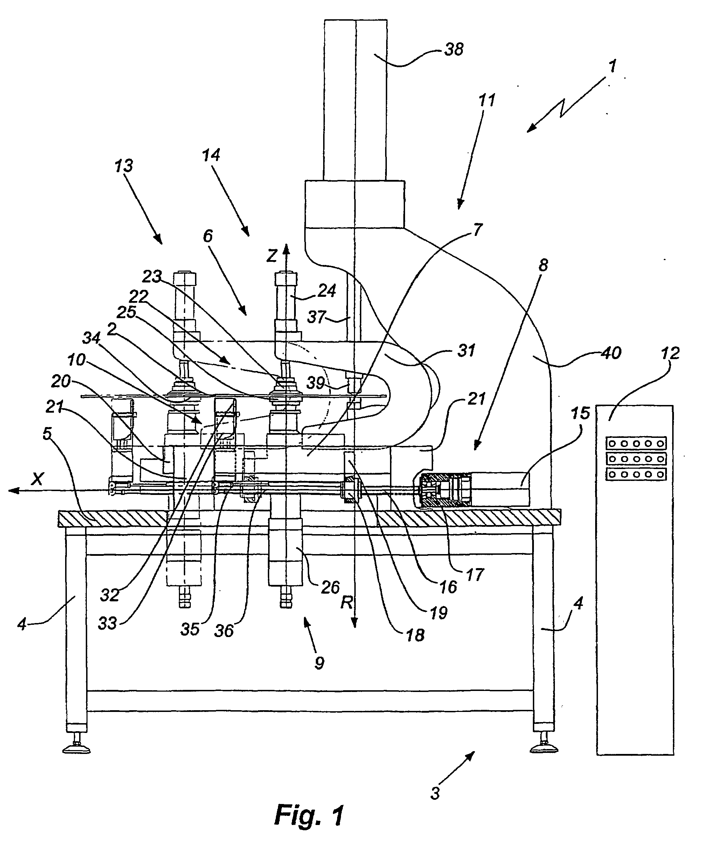

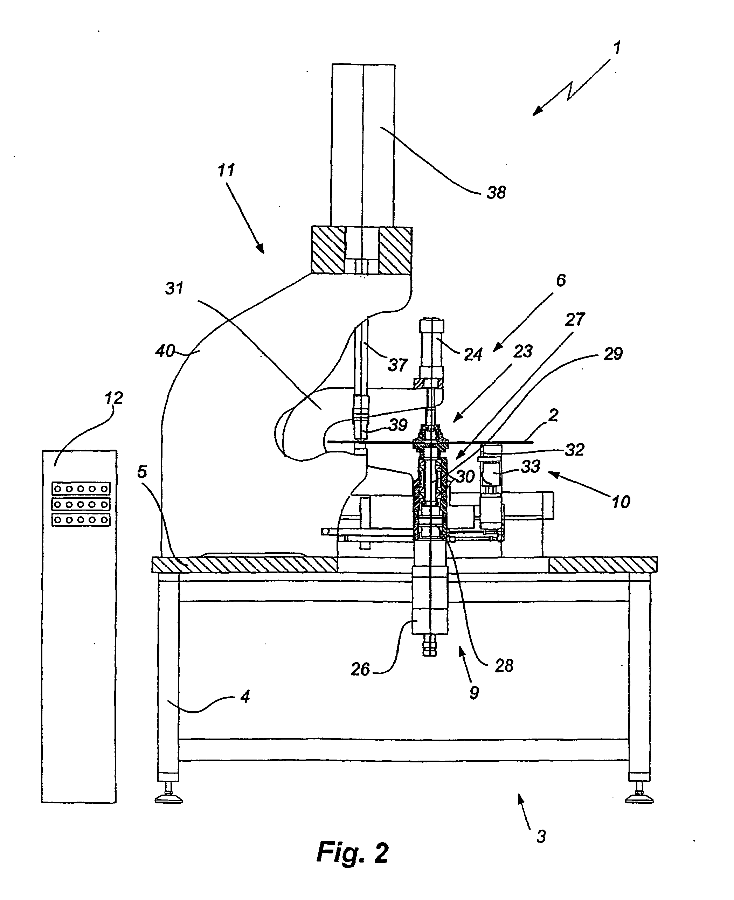

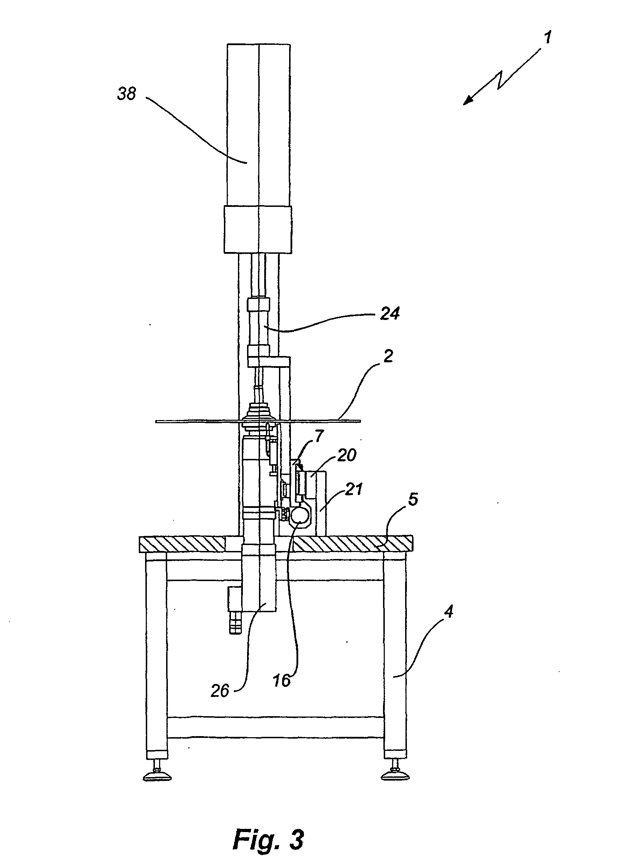

More in detail, flanges 23 and 25 are subject to the action of first actuator 24 to pressure engage tool holding it in a perfectly horizontal position. Upper flange 23 is idle in order to allow the driving lower flange to bring into rotation mandrel 22 and consequently tool 2 about its vertical axis Z.
In order to allow tool 2 to be positioned when carriage 7 is in its first operative position 13 idle flange 23 is reciprocated by first actuator 24 (preferably consisting of an automatic piston) between an upper position (not shown) where idle flange 23 is disengaged from discoidally shaped tool 2, and a lower position (illustrated in Figs. 1, 2 and 3) where idle flange 23 exerts a compression action onto the hub of the discoidally shaped tool 2.

In turn, second movement means 9 comprise a second motor 26, which is connected to driving flange 25 by means of transmission means 27 including a second self-aligning joint 28 and by means of a transmission shaft 29 supported in its vertical position by two pairs of bearings 30. Advantageously, both motors 15 and 26 are of brushless type which are capable of featuring a very high control of the movements of tool 2.

The mechanical connection between holding means 6 and carriage 7 is accomplished by means of a substantially C-shaped first support body 31.

Detection means 10 may advantageously comprise a linear transducer 32 which is capable of emitting a signal, for example a current signal of different intensity according to the extent of the measured deviation. Such a signal is transmitted to the logic control unit 12, for example consisting of an industrial PLC, by means of a suitable electric cable not illustrated in the drawings.

To this end, when carriage 7 is located in its first operative position 13, linear transducer 32 can be operatively brought into contact with its outer peripheral edge by means of a second actuator 33 supported by the surface of discoidally shaped tool 2. In such a way, upon rotation of tool 2 imparted by second movement means 9 a signal indicating the extent of the deviation from planarity of the discoidally shaped tool as a function of its angular position is emitted.

In accordance with the embodiment shown in the attached drawings, linear transducer 32 acts on the lower surface of tool 2 and to that purpose it is vertically moved by second actuator 33, which preferably consists of a pneumatic piston. in this regards, it is observed that the correct operation of linear transducer 32 is ensured only if this latter is kept in contact and in sliding relationship with the lower surface of the discoidally shaped tool. Thus, an elastic element is associated with linear transducer 32, to keep this latter in contact with tool 2 whilst exerting a certain pressure thereon.

As the maximum deviation of tool 2 from planarity is detected in correspondence of the outer periphery thereof, during the detection step the linear transducer 32 is advantageously positioned in correspondence of the peripheral edge 34 of discoidally shaped tool 2.

Machine 1 according to the present invention is suitable to be employed for correcting planarity errors of discoidally shaped tools 2 having a very wide range of sizes and specifically designed according to the required applications. Thus, such machine can be for example employed both for tools 2 whose size is the largest available on the market, with a diameter up to 600 mm and thicknesses up to 5 mm, and for tools 2 having the smallest possible sizes available on the market, which means diameters up to 140 mm and thicknesses up to 1 mm.

To this aim, flanges 23, 25 may be provided with various sizes according to the different sizes of the hubs of tools 2, and with reference to Fig. 1, in particular a third actuator 35 may be provided in order to allow the motion of linear transducer 32 along a radial direction of tool 2, similarly enabling its positioning in correspondence of its outermost peripheral edge even upon variation of the dimensions thereof.

In order to accomplish a controlled movement of the linear transducer 32 by means of the third actuator 35, this latter being similarly and advantageously constituted by a pneumatic piston, a linear potentiometer 36 may be provided, said linear potentiometer being suitable for defining the position held by transducer 32 with respect to the tool 2.

According to the embodiment illustrated in the attached drawings, the above mentioned pressing means 11 comprise an arm 37 that can be actuatable along a vertical compression direction R, by a fourth actuator 38 between a lower position, wherein arm 37 pressure engages a portion of the discoidally shaped tool 2, and an upper position wherein arm 37 is disengaged from discoidally shaped tool 2.

At the lower end of arm 37 there is provided a pushing rod 39 having an end portion not shown in the drawings of a material with enhanced hardness and coated with a steel liner.

The compression force to be exerted on the upper surface of tool 2 may reach several tens of thousands of N, for example advantageously ranging between 1x10⁵ and 2x10⁵, according to the size of tool 2, deviation from planarity and exact location of the portion of tool 2 to be pressed. Such a force can be for example obtained by means of an hydraulic-pneumatic cylinder provided with an air-oil multiplication chamber.

Pressing means 11 can be rigidly fitted onto supporting structure 3 of machine 1 by means of a second substantially C-shaped support body 40.

Attention is drawn to the fact that according to the above described embodiment, the pressing action is exerted by means 11 only on the upper surface of tool 2. However, simple constructive modifications would result in pressing means capable to operate even or exclusively onto the lower surface of tool 2.

Similarly detection of the deviations from planarity as described in the above example and carried out on the lower surface of tool 2 may be even or exclusively carried out on the upper surface of tool 2, without falling outside the scope of the present invention.

In use, machine 1 described as above from a mainly structural point of view operates under control of the logic control unit 12 as outlined below.

Firstly, machine 1 is arranged in its first operative position 13 by means of first movement means 8. In such a position a protection panel mounted onto machine 1 and not shown in the attached drawings, is initially provided to allow an operator or automatic loading means to place tool 2 on lower driving flange 25 of mandrel 22.

Subsequently, a first actuator 24 is then actuated to hold tool 2 in a perfectly horizontal position. At this point, logic unit 12 controls the start-up of a detection step of any deviation of tool 2 from planarity by the actuation of linear transducer 32, which is controllingly moved (also on account of linear potentiometer 36) by second and third actuators 33, 35 and is located along the peripheral edge 34 of tool 2.

In such a way, when tool 2 is brought into rotation by the second movement means 9, a full detection of the deviations from planarity affecting it along its outer peripheral edge takes place.

Once said detection step has been carried out, logic control unit 12 elaborates the information relating to the deviations of the tool from planarity and determine a sequence of portions of the tools 2 to be controllably compressed by pressing means 11.

For that purpose, logic control unit 12 subsequently brings the discoidally shaped tool 2 into locations suitable for allowing compression by means of arm 37 of the surface portions of tool 2, which have been determined in the previous detection step. Thus, logic control unit 12 provides movements of tool 2 on its lying plane by means of the actuation of first movement means 8 and of second movement means 9.

The actuation of first movement means 8 also initially allows to bring carriage 7 to its second operative position 14.

Once the pressing sequence of the selected portions on the surface of tool 2 has been completed, at least another step for the detection of the planarity of tool 2 is envisaged, this step being preceded by return of carriage 7 to its first operative position 13.

If during this step tool 2 satisfies the planarity tolerances or if the maximum amount of operating cycles has been carried out (analyses and corrections), then the (manual or automatic) tool 2 will be removed from mandrel 22 that is opened for that purpose immediately after that carriage 7 returns to its first operative position 13.

Otherwise a further working step (correction and analysis) is carried out up to when the planarity requirements initially set are met and therefore up to when the tool is (manually or automatically) removed.

The present invention conceived as herein detailed accomplishes the aims set for it.

Obviously, in practice the present invention may have forms and conformations that are different from that detailed above without departing from the scope of the present invention.

Furthermore, all details may be substituted with technically equivalent elements and the machine according to the present invention can be of any size, shape, form and made of any material according to the requirements set by the specific needs to be fulfilled.

## Claims

1. Machine for the correction of planarity errors affecting discoidally shaped tools, comprising:
- a supporting structure (3) lying on the ground;
- holding means (6) mounted on said supporting structure (3) for removably engaging at least one discoidally shaped tool (2) in proximity of the central portion thereof;
- pressing means (11) mounted on said supporting structure (3) and operatively actuated to pressure engage at least one of the upper and/or lower surfaces of the discoidally shaped tool (2);
- first movement means (8) for providing a relative movement of said discoidally shaped tool (2) with respect to said pressing means (11) along at least one direction (X) that is substantially parallel to the main tool extension plane;
- second movement means (9) for rotating said discoidally shaped tool (2) about its central axis (Z);
- detection means (10) adapted to be operatively actuated onto at least one of the upper and/or lower surfaces of said discoidally shaped tool (2) for detecting the deviations from planarity of said at least one surface thereof;
- a logic control unit (12) operatively connected with said detection means (10) for controlling said first and second movement means (8, 9) and for actuating said pressing means (11) to selectively engage at least one surface of the discoidally shaped tool (2) for correcting the planarity errors thereof;
**characterised in that** said pressing means (11) are rigidly fixed onto said supporting structure (3), said holding means (6) being supported by a movable carriage (7) which is slidingly mounted on guide means (20) secured to said supporting structure (3), said first movement means (9) being operatively associated with said carriage (7) for translating it between a first operative position wherein said discoidally shaped tool (2) is maintained by said holding means (6) in a substantially horizontally position and a second operative position wherein said discoidally shaped tool (2) is pressure engaged by said pressing means (11), said detection means (10) being integrally fitted onto said carriage (7) to be actuated with said carriage (7) in its first operative position, said logic control unit (12) comprising elaboration means for processing deviations from planarity detected by said detection means (10) and for controlling operation of said pressing means (11) exclusively in correspondence of the outermost peripheral edge (34) of the discoidally shaped tool (2) where the planarity error is maximum, in such a manner to avoid detection and correction of other portions of the tool where the planarity errors are smaller, thus reducing detection and correction time while achieving a relatively high and constant quality correction standard.

2. Machine according to claim 1, **characterised in that** said elaboration means comprise a program suitable for defining a sequence of pressing step carried out by said pressing means (11) on the surface of said discoidally shaped tool (2), said sequence corresponding to a series of relative, positions of said discoidally shaped tool (2) with respect to said pressing means (11) by controlled actuation of said first and second movement means (8, 9).

3. Machine according to claim 1, **characterised in that** said first movement means (8) comprise a first motor (15) mechanically connected to an advancement screw (16) on which a support joint (17) rigidly joint to said carriage (7) for the movement of said discoidally shaped tool (2) along said translation direction (X).

4. Machine according to claim 3, **characterised in that** said first motor (15) is connected to said advancement screw (16) by means of a first self-aligning joint (17).

5. Machine according to claim 1, **characterised in that** said holding means (6) comprise at least one mandrel (22) provided with an idle flange (23) that is mechanically connected to a first actuator (24) suitable to move said idle flange (23) between an upper position wherein it is raised from said discoidally shaped tool (2) and a lower position wherein it centrally pressure engages said discoidally shaped tool (2).

6. Machine according to claim 1, **characterised in that** said holdingmeans (6) further comprise a driving flange (25) mechanically connected to said second movement means (9).

7. Machine according to claim 6, **characterised in that** said second movement means (9) comprise a second motor (26) connected to said driving flange (25) by means of transmission means (27).

8. Machine according to claim 7, **characterised in that** said transmission means (27) comprise at least one second self-aligning joint (28) and at least one transmission shaft (29) mounted in a vertical position by means of bearings (30).

9. Machine according to claim 1, **characterised in that** said detection means (10) comprise a linear transducer (32).

10. Machine according to claim 9, **characterised in that** a second actuator (33) is operatively connected to said linear transducer (32) to move it between a distal position from said discoidal tool (2) and a proximal position abutting against the surface of said discoidally shaped tool (2), a third actuator (35) being operatively connected to said linear transducer (32) to move it along a radial direction to locate it in correspondence of said outermost peripheral edge.

11. Machine according to claim 10, **characterised in that** it further comprises a linear potentiometer (36) mechanically connected to said linear transducer (32) to control the position thereof with respect to the tool (2) along said radial direction.

12. Machine according to claim 1, **characterised in that** said holding means (6) are mounted onto said carriage (7) by means of a first substantially C shaped supporting body (31), said pressing means (11) being rigidly mounted on said supporting structure (3) by means of a substantially C shaped second supporting body (40).

13. Machine according to claim 1, **characterised in that** said pressing means (11) comprise at least one arm (37) actuatable along a vertical compression axis (R) by means of a fourth actuator (38) between a lowered position, wherein said arm (37) pressure engages a portion of the surface of said discoidally shaped tool (2), and a raised position wherein said arm (37) is raised from said discoidally shaped tool (2).

14. Machine according to claim 13, **characterised in that** said arm (37) has one lower end carrying a pushing rood (39) having at least one active portion made of a relatively hard material.

15. Machine according to claim 14, **characterised in that** said fourth actuator (38) is constituted by a hydraulic, respectively pneumatic cylinder provided with an air-oil multiplication chamber.

## Patentansprüche

1. Maschine zur Korrektur von Unebenheiten in scheibenförmigen Werkzeugen mit
- einer am Boden aufliegenden Tragstruktur (3),
- Halteeinrichtungen (6), die auf der Tragstruktur (3) montiert sind, um mindestens ein scheibenförmiges Werkzeug (2) in der Nähe von dessen zentralem Bereich lösbar anzubringen,
- Druckeinrichtungen (11), die auf der Tragstruktur (3) montiert und funktional betätigt sind, um mindestens eine der oberen und/oder unteren Oberflächen des scheibenförmigen Werkzeugs (2) mit Druck zu beaufschlagen,
- ersten Bewegungseinrichtungen (8), um dem scheibenförmigen Werkzeug (2) eine relative Bewegung mit Bezug auf die Druckeinrichtungen (11) entlang mindestens einer Richtung (X) zu vermitteln, die im wesentlichen parallel ist zu der Haupterstreckungsebene des Werkzeugs,
- zweiten Bewegungseinrichtungen (9), um das scheibenförmige Werkzeug (2) um seine zentrale Achse (Z) zu drehen,
- einer Erfassungseinrichtung (10), die angepasst ist, um funktional betätigt zu werden auf mindestens einer der oberen und/oder unteren Oberflächen des scheibenförmigen Werkzeugs (2), um Abweichungen von der Ebenheit mindestens einer der Oberflächen zu erfassen,
- einer logischen Steuereinheit (12), die funktional verbunden ist mit der Erfassungseinrichtung (10) zur Steuerung der ersten und zweiten Bewegungseinrichtungen (8, 9) und zur Betätigung der Druckeinrichtungen (11), um wahlweise mindestens eine Oberfläche des scheibenförmigen Werkzeugs (2) zur Korrektur von dessen Unebenheiten zu beaufschlagen,
**dadurch gekennzeichnet, dass** die Druckeinrichtungen (11) starr auf der Tragstruktur (3) befestigt sind, wobei die Halteeinrichtungen (6) gehalten sind von einer beweglichen Führung (7), die gleitend montiert ist auf Führungseinrichtungen (20), die an der Tragstruktur (3) gesichert sind, wobei die ersten Bewegungseinrichtungen (8) funktional zugeordnet sind zu der Führung (7), um diese zwischen einer ersten funktionalen Position, in der das scheibenförmige Werkzeug (2) von den Halteeinrichtungen (6) in einer im wesentlichen horizontalen Position gehalten ist und einer zweiten funktionalen Position, in der das scheibenförmige Werkzeug (2) von den Druckeinrichtungen (11) mit Druck beaufschlagt ist, zu bewegen, wobei die Erfassungseinrichtung (10) integral auf die Führung (7) gepasst ist, um mit der Führung (7) in ihre erste funktionale Position gebracht zu werden, wobei die logische Steuereinheit (12) Bearbeitungseinrichtungen umfasst zur Bearbeitung von Abweichungen von der Ebenheit, die von der Erfassungseinrichtung (10) erfasst sind, und zur Steuerung des Betriebs der Druckeinrichtungen (11), ausschließlich entsprechend dem äußersten Umfangsrand (34) des scheibenförmigen Werkzeugs (2), an dem die Unebenheiten maximal sind, auf eine Weise, um Erfassen und Korrigieren anderer Bereiche des Werkzeugs, an denen die Unebenheiten kleiner sind, zu vermeiden und so Zeit zum Erfassen und Korrigieren zu reduzieren bei Erreichen eines relativ hohen und konstanten Standards bei der Qualitätskorrektur.

2. Maschine gemäß Anspruch 1, **dadurch gekennzeichnet, dass** die Bearbeitungseinrichtungen ein geeignetes Programm umfassen zur Bestimmung einer Folge von Druckschritten, die von den Druckeinrichtungen (11) auf der Oberfläche des scheibenförmigen Werkzeugs (2) ausgeführt werden, wobei die Folge einer Reihe von relativen Positionen des scheibenförmigen Werkzeugs (2) in Bezug zu den Druckeinrichtungen (11) entspricht, durch gesteuerte Betätigung der ersten und zweiten Bewegungseinrichtungen (8, 9).

3. Maschine gemäß Anspruch 1, **dadurch gekennzeichnet, dass** die ersten Bewegungseinrichtungen (8) einen ersten Motor (15) umfassen, der mechanisch verbunden ist mit einer Förderschraube (16), an die eine Tragverbindung (17) starr angelenkt zu der Führung (7) für die Bewegung des scheibenförmigen Werkzeugs (2) entlang der Translations-Richtung (X).

4. Maschine gemäß Anspruch 3, **dadurch gekennzeichnet, dass** der erste Motor (15) verbunden ist mit der Förderschraube (16) mittels einer selbst zentrierenden Verbindung (17).

5. Maschine gemäß Anspruch 1, **dadurch gekennzeichnet, dass** die Halteeinrichtungen (6) mindestens eine Spindel (22) mit einem Leerlaufflansch (23) umfassen, die mechanisch verbunden ist mit einem ersten Betätigungselement (24), das geeignet ist den Leerlaufflansch (23) zwischen einer oberen Position (24), die abgehoben ist von dem scheibenförmigen Werkzeug (2) und einer unteren Position, in der es das scheibenförmige Werkzeug (2) zentral mit Druck beaufschlagt, zu bewegen.

6. Maschine gemäß Anspruch 1, **dadurch gekennzeichnet, dass** die Halteeinrichtungen (6) weiter einen Antriebsflansch (25) umfassen, der mechanisch verbunden ist mit den zweiten Bewegungseinrichtungen (9).

7. Maschine gemäß Anspruch 6, **dadurch gekennzeichnet, dass** die zweiten Bewegungseinrichtungen (9) einen zweiten Motor (26) umfassen, der mit dem Antriebsflansch (25) mittels Getriebeeinrichtungen (27) verbunden ist.

8. Maschine gemäß Anspruch 7, **dadurch gekennzeichnet, dass** die Getriebeeinrichtungen (27) mindestens einen zweiten selbst zentrierenden (28) umfassen und mindestens eine Getriebewelle (29), die vertikal montiert ist mittels Lager (30).

9. Maschine gemäß Anspruch 1, **dadurch gekennzeichnet, dass** die Erfassungseinrichtung (10) einen linearen Wandler (32) umfasst.

10. Maschine gemäß Anspruch 9, **dadurch gekennzeichnet, dass** ein zweites Betätigungselement (33) funktional verbunden ist mit dem linearen Wandler (32), um ihn zwischen einer entfernten Position zu dem scheibenförmigen Werkzeug (2) und einer nahen Position, in der er an der Oberfläche des scheibenförmigen Werkzeugs (2) anliegt, zu bewegen ein drittes Betätigungselement (35) funktional verbunden ist mit dem linearen Wandler (32), um ihn entlang einer radialen Richtung zu bewegen, um ihn relativ zu der äußersten Umfangskante anzuordnen.

11. Maschine gemäß Anspruch 10, **dadurch gekennzeichnet, dass** weiter ein lineares Potentiometer (36) vorgesehen ist, das mechanisch verbunden ist mit dem linearen Wandler (32), um dessen Position relativ zu dem Werkzeug (2) entlang der radialen Richtung zu steuern.

12. Maschine gemäß Anspruch 1, **dadurch gekennzeichnet, dass** die Halteeinrichtungen (6) auf die Führung (7) montiert sind mittels eines ersten im wesentlichen C-förmigen Haltekörpers (31), wobei die Druckeinrichtungen (11) starr auf der Tragstruktur (3) montiert sind mittels eines zweiten im wesentlichen C-förmigen Haltekörpers (40).

13. Maschine gemäß Anspruch 1, **dadurch gekennzeichnet, dass** die Druckeinrichtungen (11) mindestens einen Arm (37) aufweisen, der entlang einer vertikalen Druckachse (R) betätigbar ist mit einem vierten Betätigungselement (38) zwischen einer unteren Position, in der dieser Arm (37) mit Druck auf einen Bereich der Oberfläche des scheibenförmigen Werkzeugs (2) und einer erhöhten Position, in der dieser Arm (37) abgehoben ist von dem scheibenförmigen Werkzeug (2).

14. Maschine gemäß Anspruch 13, **dadurch gekennzeichnet, dass** der Arm (37) ein unteres Ende aufweist, das ein Druckpleuel (39) trägt mit mindestens einem aktiven Bereich, der aus einem relativ harten Material gefertigt ist.

15. Maschine gemäß Anspruch 14, **dadurch gekennzeichnet, dass** das vierte Betätigungselement (38) gebildet ist aus einem hydraulischen oder pneumatischen Zylinder, der mit einer Luft-Öl Verstärkungskammer versehen ist.

## Revendications

1. Machine pour la correction d'erreurs de planéité affectant des outils de forme discoïdale, comprenant :
- une structure de support (3) reposant sur le sol ;
- des moyens de fixation (6) montés sur ladite structure de support (3) pour attaquer de façon amovible au moins un outil de forme discoïdale (2) à proximité de la partie centrale de ce dernier ;
- des moyens presseurs (11) montés sur ladite structure de support (3) et qui sont actionnés fonctionnellement pour attaquer par pression au moins une des surfaces supérieure et/ou inférieure de l'outil de forme discoïdale (2) ;
- des premiers moyens de déplacement (8) destinés à produire un mouvement relatif dudit outil de forme discoïdale (2) par rapport auxdits moyens presseurs (11) selon au moins une direction (X) qui est sensiblement parallèle au plan de l'extension principale de l'outil ;
- des deuxièmes moyens de déplacement (9) destinés à faire tourner l'outil de forme discoïdale (2) autour de son axe central (Z) ;
- des moyens de détection (10) adaptés pour être actionnés activement sur au moins une des surfaces supérieure et/ou inférieure dudit outil de forme discoïdale (2) pour détecter les écarts de planéité de ladite au moins une surface de cet outil ;
- une unité de commande logique (12) connectée fonctionnellement auxdits moyens de détection (10) pour commander lesdits premier et deuxième moyens de déplacement (8, 9) et pour actionner lesdits moyens presseurs (11) de façon qu'ils attaquent sélectivement au moins une surface de l'outil de forme discoïdale (2) afin de corriger les erreurs de planéité de ce dernier ;
**caractérisée en ce que** lesdits moyens presseurs (11) sont fixés rigidement sur ladite structure de support (3), lesdits moyens de fixation (6) étant supportés par un chariot mobile (7) qui est monté coulissant sur des moyens de guidage (20) fixés à ladite structure de support (3), lesdits premiers moyens de déplacement (9) étant associés fonctionnellement audit chariot (7) pour le déplacer en translation entre une première position fonctionnelle, dans laquelle ledit outil de forme discoïdale (2) est maintenu par lesdits moyens de fixation (6) dans une position sensiblement horizontale et une deuxième position fonctionnelle dans laquelle ledit outil de forme discoïdale (2) est attaqué par pression par lesdits moyens presseurs (11), lesdits moyens de détection (10) étant montés sur ledit chariot (7) de façon intégrée pour être actionnés avec ledit chariot (7) dans sa première position fonctionnelle, ladite unité de commande logique (12) comprenant des moyens d'élaboration destinés à traiter les écarts de planéité détectés par lesdits moyens de détection (10) et à commander le fonctionnement desdits moyens presseurs (11) exclusivement dans la région du bord périphérique extrême extérieur (34) de l'outil de forme discoïdale (2) où l'erreur de planéité est maximale, de manière à éviter de détecter et de corriger d'autres parties de l'outil où les erreurs de planéité sont plus petites, en réduisant ainsi le temps de détection et de correction tout en obtenant un niveau de correction d'une qualité relativement haute et constante.

2. Machine selon la revendication 1, **caractérisée en ce que** lesdits moyens d'élaboration comprennent un programme approprié pour définir une séquence de phases de pression exécutée par lesdits moyens presseurs (11) sur la surface dudit outil de forme discoïdale (2), ladite séquence correspondant à une série de positions relatives dudit outil de forme discoïdale (2) par rapport auxdits moyens presseurs (11) par un actionnement contrôlé desdits premiers et seconds moyens de déplacement (8, 9).

3. Machine selon la revendication 1, **caractérisée en ce que** lesdits premiers moyens de déplacement (8) comprennent un premier moteur (15). relié mécaniquement à une vis d'avance (16) sur laquelle un joint de support (17) est attaché rigidement audit chariot (7) pour déterminer le mouvement dudit outil de forme discoïdale (2) selon ladite direction de translation (X).

4. Machine selon la revendication 3, **caractérisée en ce que** ledit premier moteur (15) est relié à ladite vis d'avance (16) au moyen d'un premier joint auto-centreur (17).

5. Machine selon la revendication 1, **caractérisée en ce que** lesdits moyens de fixation (6) comprennent au moins un mandrin (22) muni d'un flasque fou (23) qui est relié mécaniquement à un premier actionneur (24) approprié pour déplacer ledit flasque fou (23) entre une position supérieure, dans laquelle il est éloigné dudit outil de forme discoïdale (2) et une position inférieure dans laquelle il attaque ledit outil de forme discoïdale (2) par pression au centre.

6. Machine selon la revendication 1, **caractérisée en ce que** lesdits moyens de fixation (6) comprennent en outre un flasque moteur (25) relié mécaniquement auxdits seconds moyens de déplacement (9).

7. Machine selon la revendication 6, **caractérisée en ce que** lesdits seconds moyens de déplacement (9) comprennent un second moteur (26) relié audit flasque moteur (25) par des moyens de transmission (27).

8. Machine selon la revendication 7, **caractérisée en ce que** lesdits moyens de transmission (27) comprennent au moins un second joint auto-centreur (28) et au moins un arbre de transmission (29) monté dans une position verticale à l'aide de paliers (30).

9. Machine selon la revendication 1, **caractérisée en ce que** lesdits moyens de détection (10) comprennent un transducteur linéaire (32).

10. Machine selon la revendication 9, **caractérisée en ce qu'**un second actionneur (33) est relié fonctionnellement audit transducteur linéaire (32) pour le déplacer entre une position distale éloignée dudit outil de forme discoïdale (2) et une position proximale en butée contre la surface dudit outil de forme discoïdale (2), un troisième actionneur (35) étant relié fonctionnellement audit transducteur linéaire (32) pour le déplacer selon une direction radiale afin de le placer dans la région dudit bord périphérique extrême extérieur.

11. Machine selon la revendication 10, **caractérisée en ce qu'**elle comprend en outre un potentiomètre linéaire (36) relié mécaniquement audit transducteur linéaire (32) pour commander la position de ce dernier par rapport à l'outil (2) selon ladite direction radiale.

12. Machine selon la revendication 1, **caractérisée en ce que** lesdits moyens de fixation (6) sont montés sur ledit chariot (7) au moyen d'un premier corps de support (31) sensiblement en forme de C, lesdits moyens presseurs (11) étant montés rigidement sur ladite structure de support (3) au moyen d'un second corps de support (40) sensiblement en forme de C.

13. Machine selon la revendication 1, **caractérisée en ce que** lesdits moyens presseurs (11) comprennent au moins un bras (37) pouvant être actionné le long d'un axe de compression vertical (R) au moyen d'un quatrième actionneur (38) entre une position abaissée dans laquelle ledit bras (37) attaque par pression une portion de la surface dudit outil de forme discoïdale (2) et une position relevée dans laquelle ledit bras (37) est soulevé au-dessus dudit outil de forme discoïdale (2).

14. Machine selon la revendication 13, **caractérisée en ce que** ledit bras (37) possède une extrémité inférieure qui porte une tige de poussée (39) ayant au moins une portion active faite d'une matière relativement dure.

15. Machine selon la revendication 14, **caractérisée en ce que** ledit quatrième actionneur (38) est constitué par un cylindre hydraulique, respectivement pneumatique, muni d'une chambre multiplicatrice air-huile.
